# EUROPÄISCHE PATENTSCHRIFT

(11) **EP 1 027 818 B1**
(45) Veröffentlichungstag und Bekanntmachung des Hinweises auf die Patenterteilung: **22.05.2002**
(21) Anmeldenummer: 97952698.5
(22) Anmeldetag: 21.11.1997
(51) Int. Cl.: H04R 9/02

(54) **VERFAHREN UND ANORDNUNG ZUR STEUERUNG DER AUSBREITUNG VON MAGNETFELDERN DURCH ELEKTRODYNAMISCHE/-MAGNETISCHE WANDLER, INSBESONDERE IN TELEKOMMUNIKATIONSGERÄTEN**
METHOD AND SYSTEM FOR CONTROLLING THE PROPAGATION OF MAGNETIC FIELDS BY ELECTRODYNAMIC/-MAGNETIC TRANSDUCERS, ESPECIALLY IN TELECOMMUNICATIONS DEVICES
PROCEDE ET DISPOSITIF DE COMMANDE DE LA PROPAGATION DES CHAMPS MAGNETIQUES PAR DES CONVERTISSEURS ELECTRODYNAMIQUES/ELECTROMAGNETIQUES, NOTAMMENT DANS DES APPAREILS DE TELECOMMUNICATIONS

(30) Priorität: 28.10.1997 DE 19747562
(43) Veröffentlichungstag der Anmeldung: 16.08.2000
(73) Patentinhaber: SIEMENS AKTIENGESELLSCHAFT, 80333 München (DE)
(72) Erfinder: BÖHNKE, Gerd, D-46236 Bottrop (DE)
(86) Internationale Anmeldenummer: DE9702739
(87) Internationale Veröffentlichungsnummer: WO9922550

(56) Entgegenhaltungen:
- EP-A- 0 422 424
- EP-A- 0 802 612
- DE-A- 3 401 072
- US-A- 4 272 654

## Beschreibung

Die Erfindung bezieht sich auf ein Verfahren zur Steuerung der Ausbreitung von Magnetfeldern durch elektrodynamische/magnetische Wandler, insbesondere in Telekommunikationsgeräten gemäß dem Oberbegriff des Patentanspruches 1.

Außerdem bezieht sich die Erfindung auf eine Anordnung zur Steuerung der Ausbreitung von Magnetfeldern durch elektrodynamische/-magnetische Wandler, insbesondere in Telekommunikationsgeräten gemäß dem Oberbegriff des Patentanspruches 8.

Elektrodynamische/-magnetische Wandler sind eine Untergruppe der elektroakustischen Wandler kommen demzufolge überall dort zum Einsatz, wo elektrische bzw. elektronische Signale in Sprache und/oder Sprache in elektrische bzw. elektronische Signale umzuwandeln ist. Typische Einsatzfelder sind deshalb z.B. der Audio- und HIFI-bereich, die Haustechnik mit Bereichen, wo Alarm- und Klingelsignale ausgegeben werden und die Telekommunikationstechnik.

Im letzgenannten Einsatzfeld werden insbesondere (vorwiegend) die elektrodynamischen Wandler z.B. in Handapparaten (schnurgebunden, schnurlos - z.B. Mobilteile und Handy's), Kopfhörer und Kopfsprechgarnituren meist als Hörkapsel, manchmal auch als Mikrofon eingesetzt. Seltener ist der Einsatz elektromagnetischer Wandler.

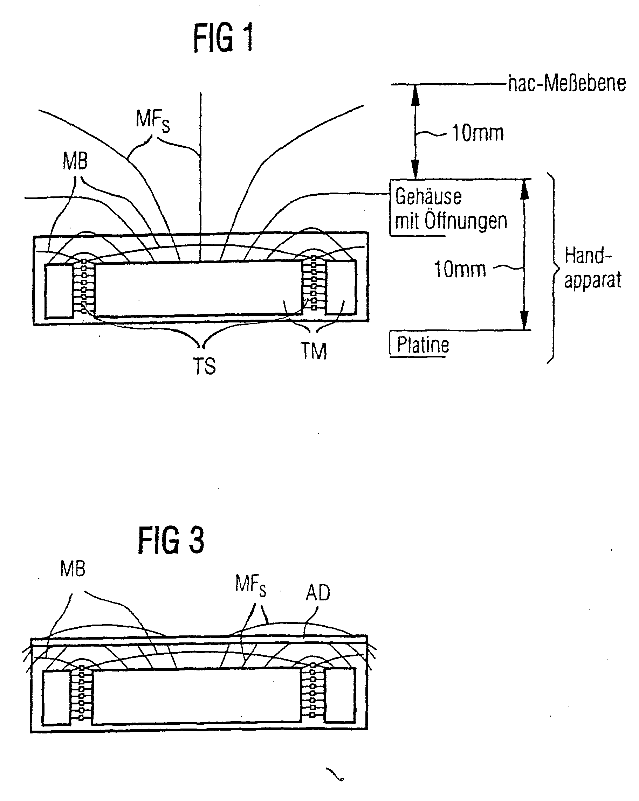

Ein großer Nachteil dieser Wandlertypen, insbesondere der elektrodynamischen Wandler, ist es, daß sie gemäß FIGUR 1 - einer Prinzipskizze eines elektrodynamischen Wandlers - z.B. durch einen Topfmagneten TM statische Magnetfelder (Streufelder) MFₛ erzeugen, die ungehindert nicht magnetische Werkstoffe (Kunststoffe) durchdringen. Magnetisierbare Gegenstände wie Stecknadeln, Büroklammern, Eisenfeil-Späne, Teilchen (in "eisenverarbeitenden" Industrien, Schlossereien ...) etc. werden unweigerlich in Richtung Zentrum des Wandlers angezogen. Sind die Teilchen klein genug, um die (Ein-) Ausspracheöffnungen zu passieren, sammeln sie sich am Ort der größten Feldstärke (Luftspalt des Topfmagneten TM) und klemmen dauerhaft eine Membran MB des Wandlers fest. Je nachdem wie empfindlich die Membran MB und somit der Wandler als solcher gegenüber derartige Mini-Fremdkörper ist, kommt es entweder zu einem abrupten Totalausfall oder einem schleichenden Ausfall der Membran MB.

Darüber hinaus führt die Relativbewegung des Handapparates in der Nähe elektrischer Leiter, insbesondere Induktivitäten, zu unerwünschten induzierten Strömen (Stw.: Herzschrittmacher, medizinische Geräte etc.).

Durch die Miniaturisierung (z.B. gekennzeichnet durch einen geringen Abstand zwischen der Schallaustrittsöffnung des Wandlers und der Schallaustrittsöffnung im Gehäuse des Handapparates; vgl. FIGUR 1) der Geräte - auf dem Markt werden immer kleinere Schnurlos-Mobilteile bzw. Mobilfunk-Handy's angeboten - verschärfen sich die Probleme, da häufig bei flachen und kleinen Wandlern "Seltene Erde"-Magnete (wie z.B. Magnete aus Nd- oder Sm-Legierungen) mit höheren Remanenzen und damit auch stärkeren Streufeldern eingesetzt werden.

Die geschilderten Probleme führen einerseits bei einigen Ländern zu Zulassungsanforderungen (z.B. Australien, Großbritannien, USA), die das statische Magnetfeld limitieren. Andererseits gibt es in letzter Zeit verstärkt Fälle, vor allem bei GSM-Handy's, wegen ausgefallener Hörkapseln aufgrund von festgeklemmten Membranen. Feinmaschige Gewebe (z.B. Staubvliese) in den akustischen Öffnungen verhindern zwar ein Festklemmen der Membran, setzten sich jedoch mit der Zeit zu und die Wiedergabe wird kontinuierlich leiser, da die magnetische Kraft dauerhaft auf die in dem Gewebe enthaltenen magnetisierbaren Teilchen ausgeübt wird.

Um dieses Problem zu lösen, wird bei Implementierung der Mikrofone in den Handapparaten auf Elektrete und Piezomikrofone zurückgegriffen, die gleichwertige Alternativen darstellen.

Bei der Implementierung der Hörkapseln sieht es anders aus.

Als Hörkapsel verwendete Piezowandler weisen kein ausgeprägtes Magnetfeld auf. Die auf dem Piezoeffekt basierende Wandlertechnologie besitzt jedoch zwei klare Nachteile gegenüber der auf einem Magnetfeld basierenden Wandlertechnologie:
1) Unter dem Aspekt der Gesprächsqualität sind elektrodynamische Wandler insbesondere bei kleinen Durchmessern klar überlegen.
2) Es gibt in einigen Ländern (z.B. Australien, Großbritannien, USA, Italien) und zusätzlich bei der British Telecom und der France Telecom generell die Forderung nach einer "**h**earing **a**id **c**ompatibility" (hac) zur Stimulierung von Hörgeräten, die (nahezu) ausschließlich induktiv ist und von einem dynamischen Magnetfeld (Wechselfeld) ausgeht. Das bedeutet, daß man das geforderte (Messung des Wechselfeldes in einer hac-Meßebene gemäß FIGUR 1) magnetische Wechselfeld mit additiven Zusatzspulen erzeugen muß.

So greift man dann letztlich doch wieder insbesondere auf die elektrodynamischen Wandler zurück und versucht gleichzeitig das angesprochene Problem anders zu lösen.

Bei Verwendung von elektrodynamischen Wandlern hilft natürlich zur Reduzierung der statischen Streufelder eine größere Entfernung zwischen der Schallaustrittsöffnung des Wandlers und der Oberfläche des Handapparates, wie es z.B. im Handapparat des auf dem Markt erhältlichen schnurgebundenen Siemens-Geräte "Symphony D" gemacht worden ist. Diese Vorgehensweise ist jedoch absolut konträr zu den Marktanforderungen nach immer kleineren Handapparaten, insbesondere mobilen (schnurlosen) Handapparaten. Um das Problem zu lösen, müßte der Abstand "Schallaustrittsöffnung des Wandlers ↔ Oberfläche des Handapparates" in etwa bei 1 cm liegen. Auf diese Weise könnten die angesprochenen negativen Einflüsse des statischen Magnetfeldes eliminiert werden.

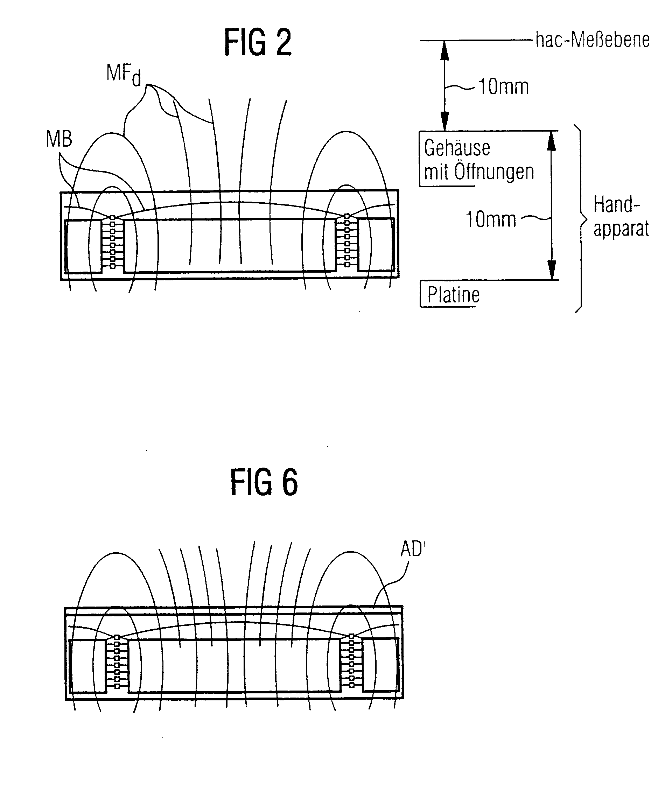

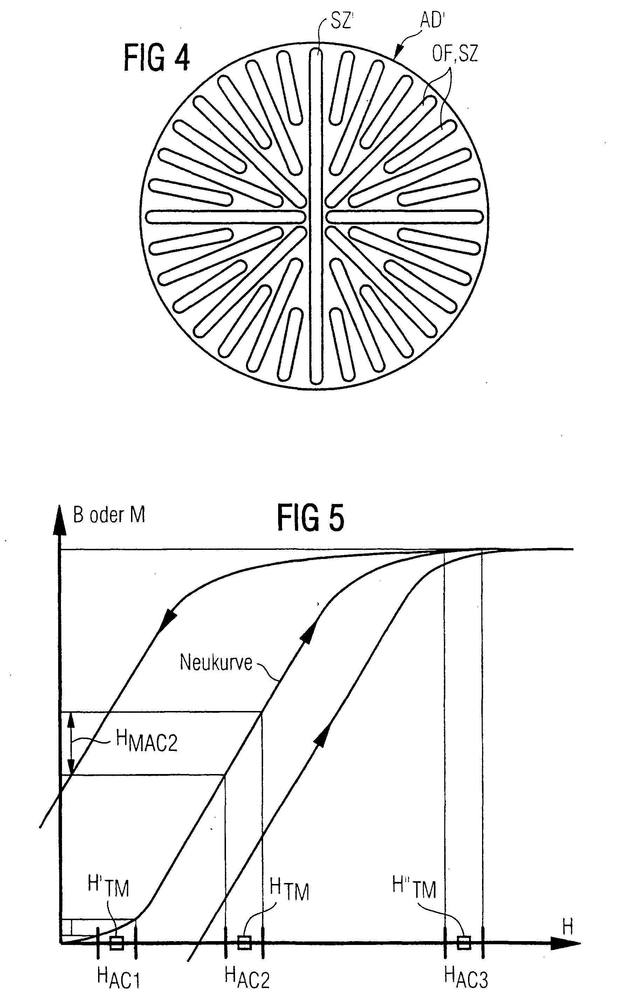

Durch die Vergrößerung des Abstandes wird aber auch gemäß FIGUR 2 - einer Prinzipskizze eines elektrodynamischen Wandlers - ein dynamisches Magnetfeld MF_{d}, das wegen der hac-Forderung benötigt wird und bei einer geschickten Dimensionierung einer Tauchspule TS, die dieses dynamische Magnetfeld MF_{d} erzeugt, in herkömmlichen elektrodynamischen Wandlern auch eigentlich genügend groß ist, so stark abgeschwächt, daß es für die hac-Forderung nicht mehr ausreicht. Es sind somit auch hier wieder zusätzliche Luftspulen zur Verstärkung des Wechselfeldes nötig.

Ausgehend von FIGUR 1 wird deshalb gemäß FIGUR 3 in bekannter Weise eine Abdeckung AD (Abschirmung, z.B. in Form eines Abschirmbleches) verwendet, die die Feldlinien des Streufeldes MFₛ bündelt und weniger in den Raum hinausragen läßt. Die Abdeckung muß natürlich mit Öffnungen versehen sein, um "transparent" zu sein für den Schalldruck, den die Membran MB erzeugt. Die magnetische Wechselfelder MF_{d} (vgl. FIGUR 2) für die hac-Forderung werden dadurch aber wieder abgeschwächt und müssen daher ebenfalls mit Zusatzspulen, die vor der Abdekkung angebracht sind, erzeugt werden.

Aus der EP 0 422 424 A2 ist ein elektrodynamischer Wandler mit verbesserter elektrischer und magnetischer Schirmung bekannt, der eine Schwingspule, eine Membran und ein Magnetsystem, die von einem Gehäuse mit Deckel umschlossen sind, aufweist. Zwischen der Innenseite des Deckels und der inneren Polplatte des Magnetsystems ist ein, aus einem nicht magnetisierbaren, elektrisch isolierenden Werkstoff bestehender, Einsatz eingespannt, der die axiale Lage des Magnetsystems bezüglich des Deckels festlegt, wobei der Deckel äußere magnetische Wechselfelder abschirmt und Öffnungen aufweist, die einen Schalldruck durchlassen.

Aus der DE 3 401 072 A1 ist ein elektrodynamischer Wandlerkopf zur zerstörungsfreien Prüfung von Werkstücken mittels Ultraschall bekannt, wobei der Wandlerkopf einen Elektromagneten mit Magnetjoch aufweist, der einen äußeren Polschuh und einen von diesem umgebenen inneren Polschuh umfaßt. Auf diesen sind Erreger- und Empfangsspulen angeordnet. Um ein unmittelbares Auflegen des inneren Polschuhs auf das sich relativ zu diesem bewegende Werkstück gefahrlos zu ermöglichen, sind diese mit einer Schutzkappe versehen, die von einem Schutzring umgeben ist, dessen dem Werkstück zugewandte Stirnfläche über der der Schutzkappe vorsteht, wobei der innere Polschuh und/oder die Schutzkappe radial verlaufende Schlitze zur Unterbindung von Wirbelströmen aufweist und die Schlitze einen Schalldruck durchlassen.

Die der Erfindung zugrundeliegende Aufgabe besteht darin, die Ausbreitung von Magnetfeldern durch elektrodynamische/-magnetische Wandler, insbesondere in Telekommunikationsgeräten, derart zu verbessern, daß von den Wandlern erzeugte statische Magnetfelder im wesentlichen abgeschirmt und dynamische Magnetfelder im wesentlichen ungehindert abgestrahlt werden.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird die Aufgabe ausgehend von der im Oberbegriff des Patentanspruches 8 definierten Anordnung durch die im Kennzeichen des Patentanspruches 8 angegebenen Merkmale gelöst.

Die der Erfindung zugrundeliegende Idee besteht darin, eine magnetische Abdeckung (Abschirmung) - z.B. aus fertigungstechnischen Gründen in Form eines Abschirmbleches oder Tiefziehbleches, die für statische Magnetfelder eines elektrodynamischen/-magnetischen Wandlers im wesentlichen impermeabel ist, zumindest im Schallaustrittsbereich des Wandlers vorzusehen. Die Abdeckung kann z.B. während der Montage des Wandlers zwischen dem den Wandler umgebenden Gehäuse (z.B. die Handapparateschale) und dem Wandler eingebracht werden oder sie kann auf dem Wandler in Form eines Topfes vormontiert sein.

Die Abdeckung weist eine die Abdeckung durchgreifende Anzahl von Öffnungen auf, wobei die Anzahl der Öffnungen so bemessen ist, daß
(1) die mit den Öffnungen versehene Abdeckung gegenüber ihrer ursprünglichen Festigkeit bzw. Steifigkeit auch weiterhin eine vorgegebene Festigkeit bzw. Steifigkeit aufweist und somit noch mechanisch montierbar ist,
(2) die Öffnungen einen von dem Wandler erzeugbaren Schalldruckpegel durchlassen,
(3) die Öffnungen durch dynamische Magnetfelder des Wandlers hervorgerufene Wirbelströme auf der Abdeckung räumlich begrenzen und diese sich dadurch nicht in voller Stärke ausbilden können.

Die Abdeckung ist zusammenfassend eine besondere Kombination aus Geometrie und magnetischen Werkstoffeigenschaften.

Die räumliche Begrenzung kann gemäß Anspruch 2 dadurch erreicht werden, daß die Öffnungen die Wirbelströme, die ohne sie in der Abdeckung induziert werden würden, kreuzen.

Die Öffnungen erfüllen bezüglich Art und Anzahl die aufgestellten Kriterien (1)...(3) gemäß Anspruch 3 insbesondere dann sehr gut, wenn sie im wesentlichen radial auf der Abdekkung angeordnet werden bzw. verlaufen.

Nach Anspruch 4 ist es dabei von Vorteil, wenn die Abdeckung geschlitzt ist; die Öffnungen also z.B. als Schlitze ausgebildet sind.

Bei der Anordnung der Öffnungen auf der Abdeckung ist es vorteilhaft, wenn die Öffnung/en wegen der Bündelungseigenschaften von Wirbelströmen (Konzentration von Wirbelströmen), insbesondere bei rotationssymetrischen Abdeckungen, im Zentrum der Abdeckungen angeordnet sind.

Nach Anspruch 5 ist deshalb mindestens einer der Schlitze im wesentlichen so lang ist, wie die Abdeckung in ihrer maximalen Ausdehnung lang ist.

Nach Anspruch 6 ist es von Vorteil, wenn die magnetische Abdeckung weichmagnetisch ist, also eine kleine Koerzitivkraft aufweist.

Durch das Einbringen eines magnetischen Werkstoffes in ein Magnetfeld, wie z.B. gemäß dem vorliegenden Fall, kommt es zu einer Verstärkung des im Magnetfeld vorhandenen dynamischen Magnetfeldanteils, wenn das Material des Werkstoffes (im vorliegenden Fall das Material der Abdeckung) in bezug auf das Magnetfeld, in dem sich der Werkstoff befindet, derart aufeinander abgestimmt ist, daß man sich bei diesen Gegebenheiten auf dem steilsten Anstieg der Neukurve des Hystereseverlaufes befindet. Im vorliegenden Fall [Verwendung von insbesondere elektrodynamischen Wandlern in Telekommunikationsendgeräten, wo das von der Tauchspule in dem dynamischen Wandler erzeugte dynamische Magnetfeld für die Stimulierung von Hörgeräten ausgenutzt wird (Stw.: hearing aid compatibility)] ist diese Verstärkung aus diesem Grund erwünscht, weil damit andere Maßnahmen zur Verstärkung des dynamischen Magnetfeldes, z.B. durch zusätzliche Luftspulen, nicht notwendig sind.

Nach Anspruch 7 ist es deshalb vorteilhaft, wenn die magnetische Abdeckung aus einem Material derart besteht, daß bei dem vorgegebenen Magnetfeld des Wandlers eine maximale Verstärkung des von der Abdeckung durchgelassenen dynamischen Magnetfeldes auftritt.

Die vorstehenden Ausführungen zu den Verfahrensansprüchen 1 bis 7 gelten in gleichem Maß auch für die Anordnungsansprüche 8 bis 14.

Ein Ausführungsbeispiel der Erfindung wird anhand der FIGUREN 4 bis 6 erläutert. Es zeigen:
FIGUR 4 ausgehend von FIGUR 3 eine spezielle Ausbildung der Abdeckung,
FIGUR 5 einen Hystereseverlauf,
FIGUR 6 ausgehend von FIGUR 2 eine Prinzipskizze eines elektrodynamischen Wandlers mit einem verstärkten dynamischen Magnetfeld.

FIGUR 4 zeigt gegenüber der Abdeckung AD nach FIGUR 3 eine speziell, z.B. rotationssymetrisch ausgebildete Abdeckung AD'. Die Abdeckung AD' kann während der Montage des Wandlers zwischen die Handapparateschale und dem Wandler eingebracht werden oder sie kann auf dem Wandler in Form eines Topfes vormontiert sein. Das besondere an der Abdeckung AD' ist eine Kombination aus Geometrie und magnetischen Werkstoffeigenschaften.

Eine möglichst radiale Anordnung von Öffnungen OF, die z.B. als Schlitze SZ ausgebildet sind, sorgt für eine Reduktion von Wirbelströmen auf der Abdeckung AD' bzw. in der Zeichenebene, die durch das magnetische Wechselfeld der Tauchspule des Wandlers erzeugt werden. Die Reduktion kann zudem noch verbessert werden, wenn zumindest ein Schlitz SZ' der Schlitze SZ durch das Zentrum der Abdeckung AD' verläuft. Nach der Lenz'schen Regel (Drei-Finger-Regel) wird das originäre Wechselfeld durch die verbliebenen Wirbelströme nur noch geringfügig abgeschwächt. Die Abdeckung AD' sollte vorzugsweise aus weichmagnetischem Material sein, das gemäß FIGUR 5 auf eine von dem Topfmagneten des Wandlers am Ort der Abdeckung AD' erzeugte magnetische Feldstärke H_{TM} abgestimmt ist.

Nach der FIGUR 5 erzeugt die Tauchspule TS nun ein additives Wechselfeld H_{AC2}. Bei richtiger Materialwahl befindet man sich auf dem steilsten Anstieg der Neukurve der Hysterese und erzeugt eine nicht unerhebliche AC-Aufmagnetisierung M_{AC2} in senkrechter Richtung zur Ebene der Abdeckung. Ist die Feldstärke H_{TM} relativ zur Hysterese zu klein (eine Feldstärke H'_{TM} mit einem additiven Wechselfeld H_{AC1}) oder zu groß (eine Feldstärke H"_{TM} mit einem additiven Wechselfeld H_{AC3}) gewählt worden, so ist der Wechselfeldbeitrag durch Aufmagnetisierung zu dem hac-Feld vernachlässigbar. Nur bei dem Wechselfeld H_{AC2} erzeugt man durch die Aufmagnetisierung M_{AC2} der Abdeckung AD' ein zusätzliches Wechselfeld H_{MAC2}, das das originäre Wechselfeld MF_{d} der Tauchspule TS - geschwächt durch die Wirbelstromverluste - überkompensiert.

FIGUR 6 zeigt dieses Verstärkungsphänomen ausgehend von FIGUR 2 anhand einer Prinzipskizze des elektrodynamischen Wandlers. Gegenüber der Darstellung in FIGUR 2 ist das in FIGUR 6 dargestellte dynamische Magnetfeld MF_{d} verstärkt worden. Dies ist durch eine größere Anzahl von Feldlinien zum Ausdruck gebracht.

Wird der elektrodynamische Wandler mit der Abdeckung AD' wie beschrieben abgedeckt bzw. abgeschirmt, so kann aufgrund von an Handapparaten (Mobilteilen) vorgenommenen Messungen das statische Magnetfeld MFₛ an der Oberfläche von Mobilteilen um ca. 87 % reduziert werden, so daß keinerlei Eisenfeilspäne, Büroklammern, Stecknadeln etc. mehr gegen die Schwerkraft angezogen werden. Gleichzeitig stieg die hac-Feldstärke um ca. 200 % an.

Der Verlust an Lautstärke des Wandlers durch die Abdeckung AD' betrug nur ca. 18 %, was leicht durch eine Anhebung der Verstärkung der Sprechschaltung um ca. 1.5 dB auszugleichen ist.

## Patentansprüche

1. Verfahren zum Steuern der Ausbreitung von Magnetfeldern durch elektrodynamische/-magnetische Wandler, insbesondere in Telekommunikationsgeräten, wobei der elektrodynamische/magnetische Wandler zumindest im Schallaustrittsbereich durch eine Abdeckung (AD') abgedeckt wird, die die Abdeckung (AD') durchgreifende Öffnungen (OF) aufweist, wobei die Öffnungen (OF) einen von dem Wandler erzeugbaren Schalldruckpegel durchlassen,
**dadurch gekennzeichnet, daß**
a) die Abdeckung (AD') magnetisch ist und für statische Magnetfelder (MFₛ) impermeabel ist,
b) die Öffnungen (OF) derart auf der Abdeckung (AD') angeordnet werden, daß
b1) die Abdeckung (AD') eine für die mechanische Montage notwendige Festigkeit und/oder Steifigkeit aufweist,
b2) die Öffnungen (OF) durch dynamische Magnetfelder (MF_{d}) des Wandlers hervorgerufene Wirbelströme auf der Abdeckung (AD') räumlich begrenzen.

2. Verfahren nach Anspruch 1, **dadurch gekennzeichnet, daß**
die Öffnungen (OF) die Wirbelströme, die ohne die Öffnungen (OF) in der Abdeckung (AD') induziert werden, kreuzen.

3. Verfahren nach Anspruch 1 oder 2, **dadurch gekennzeichnet, daß**
die Öffnungen (OF) im wesentlichen radial auf der Abdeckung (AD') angeordnet werden.

4. Verfahren nach Anspruch 1, 2 oder 3 , **dadurch gekennzeichnet, daß**
die Öffnungen (OF) Schlitze (SZ) sind.

5. Verfahren nach Anspruch 4, **dadurch gekennzeichnet, daß**
mindestens ein Schlitz (SZ') der Schlitze (SZ) im wesentlichen so lang ist, wie die Abdeckung (AD') in ihrer maximalen Ausdehnung lang ist.

6. Verfahren nach einem der Ansprüche 1 bis 5, **dadurch gekennzeichnet, daß**
die magnetische Abdeckung (AD') weichmagnetisch ist.

7. Verfahren nach einem der Ansprüche 1 bis 6, **dadurch gekennzeichnet, daß**
die magnetische Abdeckung (AD') aus einem Material derart besteht, daß bei dem vorgegebenen Magnetfeld des Wandlers (MFₛ, MF_{d}) eine maximale Verstärkung des von der Abdeckung (AD') durchgelassenen dynamischen Magnetfeldes auftritt.

8. Anordnung zum Steuern der Ausbreitung von Magnetfeldern durch elektrodynamische/-magnetische Wandler, insbesondere in Telekommunikationsgeräten, wobei der elektrodynamische/magnetische Wandler zumindest im Schallaustrittsbereich durch eine Abdeckung (AD') abgedeckt ist, die die Abdeckung (AD') durchgreifende Öffnungen (OF) aufweist, wobei die Öffnungen (OF) einen von dem Wandler erzeugbaren Schalldruckpegel durchlassen,
**dadurch gekennzeichnet, daß**
a) die Abdeckung (AD') magnetisch ist und für statische Magnetfelder (MFₛ) impermeabel ist,
b) die Öffnungen (OF) derart auf der Abdeckung (AD') angeordnet sind, daß
b1) die Abdeckung (AD') eine für die mechanische Montage notwendige Festigkeit und/oder Steifigkeit aufweist,
b2) die Öffnungen (OF) durch dynamische Magnetfelder (MF_{d}) des Wandlers hervorgerufene Wirbelströme auf der Abdeckung (AD') räumlich begrenzen.

9. Anordnung nach Anspruch 8, **dadurch gekennzeichnet, daß**
die Öffnungen (OF) derart ausgebildet sind, daß die Wirbelströme, die ohne die Öffnungen (OF) in der Abdeckung (AD') induziert werden, gekreuzt werden.

10. Anordnung nach Anspruch 8 oder 9, **dadurch gekennzeichnet, daß**
die Öffnungen (OF) im wesentlichen radial auf der Abdeckung (AD') angeordnet sind.

11. Anordnung nach Anspruch 8, 9 oder 10 , **dadurch gekennzeichnet, daß**
die Öffnungen (OF) Schlitze (SZ) sind.

12. Anordnung nach Anspruch 11, **dadurch gekennzeichnet, daß**
mindestens ein Schlitz (SZ') der Schlitze (SZ) im wesentlichen so lang ist, wie die Abdeckung (AD') in ihrer maximalen Ausdehnung lang ist.

13. Anordnung nach einem der Ansprüche 8 bis 12, **dadurch gekennzeichnet, daß**
die magnetische Abdeckung (AD') weichmagnetisch ist.

14. Anordnung nach einem der Ansprüche 8 bis 13, **dadurch gekennzeichnet, daß**
die magnetische Abdeckung (AD') aus einem Material derart besteht, daß bei dem vorgegebenen Magnetfeld des Wandlers (MFₛ, MF_{d}) eine maximale Verstärkung des von der Abdeckung (AD') durchgelassenen dynamischen Magnetfeldes auftritt.

## Claims

1. Method for controlling the propagation of magnetic fields by electrodynamic/magnetic transducers, particularly in telecommunication appliances, in which the electrodynamic/magnetic transducer is covered, at least in the sound exit region, by a cover (AD') which has openings (OF) passing through the cover (AD'), the openings (OF) letting through a sound pressure level which can be produced by the transducer, **characterized in that**
a) the cover (AD') is magnetic and is impermeable to static magnetic fields (MFₛ),
b) the openings (OF) are arranged on the cover (AD') such that
b1) the cover (AD') has a strength and/or stiffness which is necessary for mechanical mounting,
b2) the openings (OF) spatially delimit eddy currents on the cover (AD') which are produced by dynamic magnetic fields (MF_{d}) from the transducer.

2. Method according to Claim 1, **characterized in that** the openings (OF) cross the eddy currents which are induced without the openings (OF) in the cover (AD').

3. Method according to Claim 1 or 2, **characterized in that** the openings (OF) are arranged essentially radially on the cover (AD').

4. Method according to Claim 1, 2 or 3, **characterized in that** the openings (OF) are slits (SZ).

5. Method according to Claim 4, **characterized in that** at least one slit (SZ') of the slits (SZ) is essentially the same length as the length of the cover (AD') at its maximum extent.

6. Method according to one of Claims 1 to 5, **characterized in that** the magnetic cover (AD') is soft magnetic.

7. Method according to one of Claims 1 to 6, **characterized in that** the magnetic cover (AD') is made of a material such that, with the predetermined magnetic field from the transducer (MFₛ, MF_{d}), a maximum gain is produced for the dynamic magnetic field let through by the cover (AD').

8. Arrangement for controlling the propagation of magnetic fields by electrodynamic/magnetic transducers, particularly in telecommunication appliances, in which the electrodynamic/magnetic transducer is covered, at least in the sound exit region, by a cover (AD') which has openings (OF) passing through the cover (AD'), the openings (OF) letting through a sound pressure level which can be produced by the transducer, **characterized in that**
a) the cover (AD') is magnetic and is impermeable to static magnetic fields (MFₛ),
b) the openings (OF) are arranged on the cover (AD') such that
b1) the cover (AD') has a strength and/or stiffness which is necessary for mechanical mounting,
b2) the openings (OF) spatially delimit eddy currents on the cover (AD') which are produced by dynamic magnetic fields (MF_{d}) from the transducer.

9. Arrangement according to Claim 8, **characterized in that** the openings (OF) are in such a form that the eddy currents which are induced without the openings (OF) in the cover (AD') are crossed.

10. Arrangement according to Claim 8 or 9, **characterized in that** the openings (OF) are arranged essentially radially on the cover (AD').

11. Arrangement according to Claim 8, 9 or 10, **characterized in that** the openings (OF) are slits (SZ).

12. Arrangement according to Claim 11, **characterized in that** at least one slit (SZ') of the slits (SZ) is essentially the same length as the length of the cover (AD') at its maximum extent.

13. Arrangement according to one of Claims 8 to 12, **characterized in that** the magnetic cover (AD') is soft magnetic.

14. Arrangement according to one of Claims 8 to 13, **characterized in that** the magnetic cover (AD') is made of a material such that, with the predetermined magnetic field from the transducer (MFₛ, MF_{d}), a maximum gain is produced for the dynamic magnetic field let through by the cover (AD').

## Revendications

1. Procédé destiné à contrôler la propagation de champs magnétiques issus de convertisseurs électrodynamiques/électromagnétiques, notamment dans des appareils de télécommunication, le convertisseur électrodynamique/électromagnétique étant recouvert au moins dans la zone de sortie du son par un couvercle (AD'), qui comporte des ouvertures (OF) traversant le couvercle (AD'), les ouvertures (OF) laissant passer un niveau de pression acoustique pouvant être généré par le convertisseur,
**caractérisé par le fait que**
a) le couvercle (AD') est magnétique et imperméable pour des champs magnétiques statiques (MFₛ),
b) les ouvertures (OF) sont disposées sur le couvercle (AD') de telle sorte que
b1) le couvercle (AD') présente une solidité et/ou une rigidité nécessaire au montage mécanique,
b2) les ouvertures (OF) limitent dans l'espace, sur le couvercle (AD'), les courants de Foucault générés par des champs magnétiques dynamiques (MF_{d}) du convertisseur.

2. Procédé selon la revendication 1 **caractérisé par le fait que**
les ouvertures (OF) croisent les courants de Foucault qui sont induits dans le couvercle (AD') en absence des ouvertures (OF).

3. Procédé selon la revendication 1 ou 2 **caractérisé par le fait que**
les ouvertures (OF) sont disposées sur le couvercle (AD'), pour l'essentiel, dans la direction radiale.

4. Procédé selon la revendication 1, 2 ou 3 **caractérisé par le fait que**
les ouvertures (OF) sont des fentes (SZ).

5. Procédé selon la revendication 4 **caractérisé par le fait que**
au moins une fente (SZ') parmi les fentes (SZ) est, pour l'essentiel, aussi longue que la dimension maximum du couvercle (AD').

6. Procédé selon l'une des revendications 1 à 5 **caractérisé par le fait que**
le couvercle magnétique (AD') est magnétiquement doux.

7. Procédé selon l'une des revendications 1 à 6 **caractérisé par le fait que**
le couvercle magnétique (AD') est composé d'un matériau tel que, pour le champ magnétique prédéterminé du convertisseur (MFₛ, MF_{d}), il se produit une amplification maximum du champ magnétique dynamique qui traverse le couvercle (AD')

8. Dispositif destiné à contrôler la propagation de champs magnétiques issus de convertisseurs électrodynamiques/électromagnétiques, notamment dans des appareils de télécommunication, le convertisseur électrodynamique/électromagnétique étant recouvert au moins dans la zone de sortie du son par un couvercle (AD'), qui comporte des ouvertures (OF) traversant le couvercle (AD'), les ouvertures (OF) laissant passer un niveau de pression acoustique pouvant être généré par le convertisseur,
**caractérisé par le fait que**
a) le couvercle (AD') est magnétique et imperméable pour des champs magnétiques statiques (MFₛ),
b) les ouvertures (OF) sont disposées sur le couvercle (AD') de telle sorte que
b1) le couvercle (AD') présente une solidité et/ou une rigidité nécessaire au montage mécanique,
b2) les ouvertures (OF) limitent dans l'espace, sur le couvercle (AD'), les courants de Foucault générés par des champs magnétiques dynamiques (MFₛ) du convertisseur.

9. Procédé selon la revendication 8 **caractérisé par le fait que**
les ouvertures (OF) sont conçues de telle sorte qu'elles croisent les courants de Foucault qui sont induits dans le couvercle (AD') en absence des ouvertures (OF).

10. Procédé selon la revendication 8 ou 9 **caractérisé par le fait que**
les ouvertures (OF) sont disposées sur le couvercle (AD'), pour l'essentiel, dans la direction radiale.

11. Procédé selon la revendication 8, 9 ou 10 **caractérisé par le fait que**
les ouvertures (OF) sont des fentes (SZ).

12. Procédé selon la revendication 11 **caractérisé par le fait que**
au moins une fente (SZ') parmi les fentes (SZ) est, pour l'essentiel, aussi longue que la dimension maximum du couvercle (AD').

13. Procédé selon l'une des revendications 8 à 12 **caractérisé par le fait que**
le couvercle magnétique (AD') est magnétiquement doux.

14. Procédé selon l'une des revendications 8 à 13 **caractérisé par le fait que**
le couvercle magnétique (AD') est composé d'un matériau tel que, pour le champ magnétique prédéterminé du convertisseur (MFₛ, MF_{d}), il se produit une amplification maximum du champ magnétique dynamique qui traversa le couvercle (AD').
